# EUROPEAN PATENT APPLICATION

(11) **EP 2 386 341 A1**
(43) Date of publication of application: **16.11.2011**
(21) Application number: 11165589.0
(22) Date of filing: 10.05.2011
(51) Int. Cl.: B01D 29/44, B01D 39/20

(54) **Wedge wire screen device**

(30) Priority: 12.05.2010 JP 2010110029
(71) Applicant: SRM Technical Development Co., Ltd., Itami-shi Hyogo (JP)
(72) Inventor: Inoue, Koji, Awaji-shi Hyogo (JP)
(74) Representative: Price, Paul Anthony King

(57) **Abstract**

In a wedge wire screen device 1, a multiplicity of wedge wires 2 of metal wire rod of a wedge-shaped section are arrayed in parallel, and slits S of a specified dimension are provided between the wedge wires 2, and the entire surface of the wedge wires 2 is coated with a hydrophilic paint 5. This prevents clogging of slits due to surface tension of crude liquid or waste water flowing along the screen surface, and prevents lowering of solid-liquid separation performance, even if the spacing width of the slits of the wedge wires is smaller than 0.2 mm (200 microns).

The hydrophilic paint 5 is preferably an inorganic paint mainly composed of sodium silicate, aluminum oxide, titanium oxide, and water. The hydrophilic paint 5 is applied on the entire surface of the wedge wires 2 by baking-painting at 190 °C to 220 °C.

## Description

### [Technical Field]

The present invention relates to a screen device using wedge wires.

### [Background Art]

A solid-liquid separation apparatus using screens having slits of specified dimensions provided among wedge wires, by forming wedge wires of metal wire rods of a wedge-shaped section in multiple rows in parallel, is widely used in various industrial fields, for the purpose of removal of floating matter in a wastewater treatment plant, solid-liquid separation of crude liquid in treatment process of various industrial waste water in paper pulp industry, food industry, textile industry, chemical industry, and others.

The slit spacing width between wedge wires in a screen device using wedge wires is generally 0.5 mm (500 microns), but solid matter is likely to deposit and grow on the side surfaces of the wedge wires on the back side of the screen, causing clogging of slits, and the solid-liquid separation performance may be lowered.

To prevent such screen clogging, it has been proposed to use a clogging preventive device for cleaning the slits of the screens by moving forward a brush into the wedge wires from the back side of the screen (see patent documents 1 to 3).

Even in such conventional wedge wire screen having the clogging preventive device by using the brush, when the slit spacing width is smaller than 0.2 mm (200 microns), the slits are loaded and clogged due to surface tension of crude liquid or waste water flowing on the screen surface, and the solid-liquid separation performance is extremely lowered, and liquid cannot be separated and removed sufficiently. It was hence considered to be difficult to be applied to solid-liquid separation of crude liquid or waste water of small particle size of solid matter.

### [Summary of the Invention]

It would be desirable to provide a wedge wire screen device capable of preventing lowering of solid-liquid separation performance, without allowing clogging of slits due to surface tension of crude liquid or waste water flowing on the screen surface, even when the slit spacing width of the wedge wires is smaller than 0.2 mm (200 microns).

In one aspect, the present invention provides a wedge wire screen device characterized by a configuration in which a multiplicity of wedge wires of metal wire rod of a wedge-shaped section are arrayed in parallel, and slits of a specified dimension are provided among or between the wedge wires, and preferably substantially the entire surface of the wedge wires is coated with a hydrophilic paint.

The hydrophilic paint is preferred to be an inorganic paint mainly composed of sodium silicate, aluminum oxide, titanium oxide, and water.

Preferably, the hydrophilic paint is applied on the entire surface of the wedge wires by baking-painting at 190 °C to 220 °C.

Preferably, the slit spacing width of the wedge wires is 100 microns to 300 microns. The coat film thickness of coating of the hydrophilic paint is preferred to be 5 microns to 20 microns.

According to the present invention having such configuration, since a liquid film layer of crude liquid or waste water flowing on the wedge wire screen surface is peeled by the hydrophilic action of the hydrophilic paint applied on the wedge wires, the surface tension of the liquid film layer is weakened, and the slits among the wedge wires are effectively prevented from being clogged by the liquid film layer, and the liquid passes through the slits easily and is separated. Therefore, if the slit spacing width of the wedge wire screen is as small as 100 microns to 300 microns, the liquid portion of crude liquid or waste water easily passes through the slits and is separated, and solid-liquid separation of crude liquid or waste water of very small particle size of solid matter is realized, which was considered difficult with the conventional wedge wire screen.

Moreover, it is advantageous from the viewpoint of manufacturing cost because it can be realized simply by coating the surface of the wedge wires with the hydrophilic paint.

### [Brief Description of the Drawings]

Fig. 1 is a perspective view showing a part of a wedge wire screen according to an embodiment of the present invention.
Fig. 2 is a magnified sectional view of a wedge wire screen device according to an embodiment of the present invention.

### [Embodiment of the Invention]

A preferred embodiment of the present invention is more specifically described below while referring to the accompanying drawings.

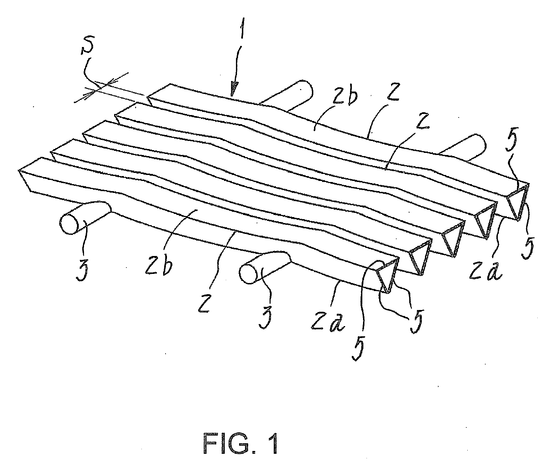

Fig. 1 shows a part of a wedge wire screen 1 of an embodiment of the present invention, in which a wedge-shaped peak portion 2a (a rear or downstream portion) of a wedge wire 2 of stainless steel wire rod of a wedge-shaped section is spot-welded to a support rod 3, and a wedge wire screen 1 is formed having a broad portion 2b as the front or upstream surface of each wedge wire 2, and a slit S of a specified or predetermined regular dimension is formed between the wedge wires 2. The slit S is determined depending on the particle size of solid matter contained in the crude liquid or waste water to be separated from solid, and it is set rather smaller, 100 microns to 300 microns, as compared with the standard slit (500 microns) of the conventional wedge wire screen.

After the wedge wire screen 1 is composed in this manner, the external surfaces (the front surface and the tapering side surfaces) of each wedge wire 2 are coated with a hydrophilic paint 5.

The hydrophilic paint 5 is an inorganic paint mainly composed of sodium silicate, aluminum oxide, titanium oxide, and water, and by baking and painting at 190 °C to 220 °C, it is applied on the entire surface of each wedge wire 2, and the coating film thickness is preferably 5 microns to 20 microns.

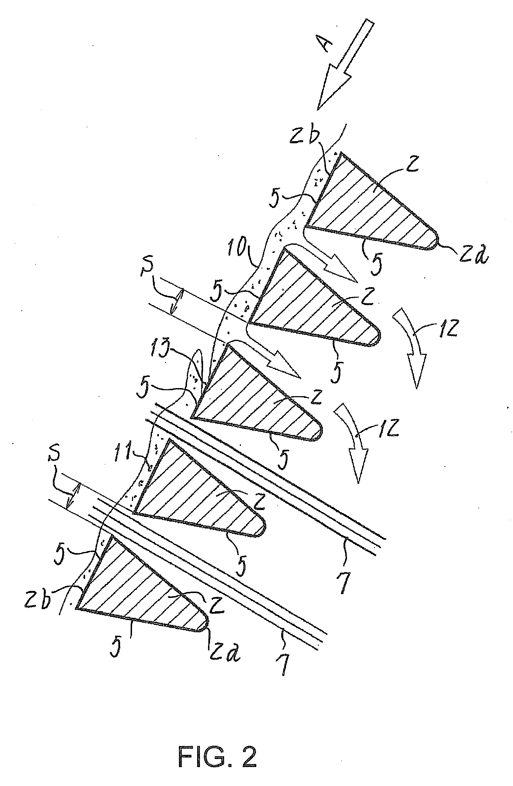

Fig. 2 shows the wedge wires 2 of a solid-liquid separation apparatus having such wedge wire screen 1 installed in an inclined position, in which a crude liquid (liquid to be treated) 10 is supplied along the inclined surface of the wedge wire screen 1 as indicated by arrow A. Coarse solid particles (waste matter) 11 contained in the crude water 10 flowing along the surface of the wedge wire screen 1 flow down along the surface of the wedge wire screen 1 and are discharged, while liquid portion (water) 12 and fine solid particles in the crude water 10 pass through the slits S, and are separated and discharged. At this time by the hydrophilic action of the hydrophilic paint 5 applied on the surface of the wedge wires 2, a liquid layer film of the crude liquid 10 formed on the surface of the wedge wire screen 1 is peeled, and its surface tension is weakened at a peeling point 13. Therefore, clogging of the slits S by the surface tension of the liquid layer film can be prevented, and the liquid portion (water) 12 in the crude liquid 10 passes through the slits S smoothly, and is separated.

In the meantime, as shown in Fig. 2, in order to prevent clogging of the slits S, same as in the conventional device described above, it is more effective to install a clogging preventive device for cleaning the slits S of the wedge wire screen 1 by moving a brush 7 into the wedge wires 2 from the back side of the wedge wire screen 1.

### [Description of the Reference Numerals and Signs]

- 1: Wedge wire screen
- 2: Wedge wire
- 2a: Wedge-shaped peak portion of wedge wire 2
- 2b: Broad portion of wedge wire 2
- 3: Support rod
- S: Slit
- 5: Hydrophilic paint
- 7: Brush
- 10: Crude liquid (liquid to be treated)
- 11: Solid matter (waste matter) in crude liquid 10
- 12: Liquid portion (water) in crude liquid 10
- 13: Peeling point

### [Prior art documents]

### [Patent documents]

Patent document 1: Japanese Utility Model Publication No. S64-4418
Patent document 2: Japanese Utility Model Publication No. S54-45575
Patent document 3: Japanese Patent Publication No. S59-39166

## Claims

1. A wedge wire screen device having a plurality of wedge wires of metal wire rod of a wedge-shaped section arrayed in parallel, with slits of a specified dimension provided between the wedge wires,
wherein the entire surface of the wedge wires is coated with a hydrophilic paint.

2. The wedge wire screen device according to claim 1, wherein the hydrophilic paint is an inorganic paint mainly composed of sodium silicate, aluminum oxide, titanium oxide, and water.

3. The wedge wire screen device according to claim 1 or 2, wherein the hydrophilic paint is applied on the entire surface of the wedge wires by baking-painting at 190 °C to 220 °C.

4. The wedge wire screen device according to any one of claims 1 to 3, wherein the slit spacing width of the wedge wires is 100 microns to 300 microns, and the coat film thickness of coating of the hydrophilic paint is 5 microns to 20 microns.
